# EUROPEAN PATENT APPLICATION

(11) **EP 4 703 250 A1**
(43) Date of publication of application: **04.03.2026**
(21) Application number: 24796363.0
(22) Date of filing: 26.04.2024
(51) Int. Cl.: B62K 5/02, B62K 5/027, B62K 5/06, B62K 5/10

(54) **ARTICULATED TRICYCLE WITH ANTI-ROLLOVER SYSTEM**

(30) Priority: 28.04.2023 ES 202330338
(71) Applicant: Genius Emobility Systems S.L., 28036 Madrid Madrid (ES)
(72) Inventor: CARRASCO VERGARA, Pablo, 28034 Madrid (ES)
(74) Representative: Diaz Nunez, Joaquin
(86) International application number: PCT/ES2024/070260
(87) International publication number: WO 2024/223973

(57) **Abstract**

A simple and economical articulated tricycle with an anti-tipping system, comprising: a front chassis, where the driver is located, with a single wheel at the front of the vehicle controlled by means of a handlebar; and a rear chassis, with two rear wheels that define its single forward direction of travel; where both chassis are connected by means of a pivot articulation that forms an angle (α) substantial upward relative to said forward direction of travel. This articulation allows the driver, together with the front chassis, to tilt when the vehicle takes a curve, while forcing the rear chassis to yaw toward the interior of the curve, thereby providing anti-tipping stability, since by steering the rear part inward during a curve, the front wheel is forced to lean more outward, increasing the radial distance between supports; and where braking blocks said tilting capability.

## Description

The present invention mainly applies to those three-wheeled vehicles or tricycles with a single front wheel responsible for steering through handlebars or a steering wheel, consisting of a front chassis where the driver is seated and, articulated with the first, a rear chassis, usually designed for carrying loads.

### STATE OF THE ART

Three-wheeled vehicles or tricycles are an excellent mobility and micromobility solution, especially in their logistics function, that is, for the transportation and delivery of goods. Commonly associated with partial propulsion by pedaling, they are known as "cargo trikes." While two-wheeled cargo bikes are sufficiently agile and successful for relatively small loads, tricycles greatly surpass them in load capacity. It should be noted that there are front-loading tricycles with two wheels at the front; however, these are more limited in volume so as not to obstruct the visibility of the driver positioned behind the load.

The risk of tipping over is one of the greatest problems associated with tricycles, since the lateral distance between supports is smaller than in four-wheeled vehicles, and furthermore, the vehicle's center of gravity is usually higher. Therefore, compared with cars, they have less lateral stability and are more susceptible to loss of control in turns, especially in situations involving fast or sharp curves, as well as during sudden maneuvers.

To reduce the risk of tipping, there exist various relatively complex solutions in which the tricycle tilts inward when cornering, similar to a motorcycle. However, due to their greater complexity and cost, these are not ideal for cargo tricycles. An example of this is EP2767464B1.

There are other solutions in which the tricycle is made up of two chassis: a front chassis with a single front wheel where the driver is seated, and a rear chassis with the other two wheels or rear axle, where the front chassis can tilt laterally in order to lean inward when turning, thus counteracting centrifugal forces. For this purpose, they feature a pivot-type articulation arranged in the longitudinal direction, connecting the front chassis to the rear chassis. This is the case with the RAP SEV tricycle (CN109466672) or the "CUBE Concept Dynamic Cargo Trike" presented in collaboration with BMW. However, while this solution counteracts the centrifugal force acting on the driver, it does not provide an anti-tipping effect for the load. This requires driving with greater caution, or prevents the vehicle from being sufficiently tall and narrow-for example, for certain urban delivery tasks or for safely traveling on bike lanes. This is the "problem to be solved" by the present invention. In addition, when these vehicles are stationary, they do not remain upright on their own.

Following the State of the Art Report of the corresponding priority application for the present invention, carried out by the Spanish Patent and Trademark Office (OEPM), other solutions for tricycles with a single front wheel should be noted: FR3020335A1, WO2020117044A1, FR2972684A1, US20120259491A1, WO2011121211A1, WO2019207713A1, JPH11334670A, US200900203448A1, and US4666018A. In all of them, the front chassis-which houses the driver-tilts in turns by means of a pivot-type articulation that connects it to the rear chassis. In these cases, however, the pivot axis is configured with a slight positive inclination relative to the longitudinal axis to improve stability. In general, these disclose tricycles in which the front chassis is predominant in the vehicle's configuration, with the rear chassis essentially consisting of the rolling axle and a drive unit. Only FR3020335A1 and WO2020117044A1 disclose vehicles whose rear chassis has the functionality to carry some load. In all of them, the degree of inclination is quite limited, and considering FR3020335A1 as the closest prior art, a preferred angle between 5 and 10 degrees is specified, and in any case less than 14 degrees. Although such a solution may be suitable for tricycles where the front chassis is predominant, or for tricycles with low load capacity, or where the center of gravity of the rear chassis and its load is sufficiently low, there remains significant room for improvement-particularly when it comes to transporting larger-volume loads with a higher center of gravity.

### SUMMARY OF THE INVENTION

The present invention applies to three-wheeled vehicles in general, and preferably to "cargo trikes" or tricycles with a predominant function of load transportation. Specifically, it applies to those three-wheeled vehicles with a single front wheel responsible for steering by means of handlebars or a steering wheel, and consisting of a front chassis where the driver is seated and which is capable of tilting to either side, and a rear chassis, articulated with the first, which does not tilt.

Given the aforementioned "problem to be solved," the present invention consists of an articulated tricycle with an anti-tipping system based on a secondary rear steering mechanism, which-similar to certain high-end automobiles-turns the rear part of the vehicle inward during a curve. In doing so, it increases the distance between supports in a simple and economical way, without requiring servos or mechanical actuators to control tilt when leaning.

To achieve this, the tricycle is configured as follows:
- A front chassis, where the driver is located, equipped with a single wheel positioned at the front of the vehicle, which is the primary steering wheel, controlled by means of handlebars or a steering wheel;
- and a rear chassis, with two rear wheels that define a single forward direction of travel;
- where both chassis are connected by means of a pivot articulation whose geometric axis, located in a vertical plane comprising the straight-ahead travel direction of the vehicle, forms a substantial upward angle relative to said direction of travel. Hereinafter, this angle will be referred to as the yaw-inducing angle.

The horizontal projection of said angle enables the front chassis to tilt to either side, while its vertical projection induces a yaw rotation in the rear chassis, proportional to the tilting or leaning angle of the front chassis. In this way, the forward direction of the rear chassis yaws-i.e., rotates in yaw-toward the same side to which the front chassis tilts.

Therefore, this tricycle is provided with front tilting and rear stabilization by yaw, since by steering the rear part of the vehicle inward during a curve, it forces the front wheel to lean more toward the outside. This increases the transverse (or radial) distance between the vertical projection of the center of mass and the front wheel's support point, while the vertical component of the articulation transmits to the rear chassis a moment of force opposed to the effect of the centrifugal force. For this reason, we refer to it as an anti-tipping system.

Since this yaw motion of the rear part of the vehicle induces a stabilizing effect compared with a conventional configuration, it may be said that this tricycle has an understeering character, as for the same turning radius, the greater the speed-and therefore the greater the tilt angle in a curve-the larger the rotation of the handlebars or steering wheel must be.

This stabilizing effect while driving can be compared to that of a motorcycle, in which, beyond a certain speed and due to gyroscopic effects, in order to take a curve, instead of merely shifting weight to one side (which has little effect in forcing a lean), one must apply countersteering so that the centrifugal force induces the lean toward the desired side-which is the opposite of the side to which the quick steering input is applied. Finally, when turning, this force becomes balanced against the weight component generated by maintaining the appropriate tilt. Therefore, when driving the vehicle proposed herein, it will be necessary to take into account this countersteering technique to assist the vehicle in entering curves.

On the other hand, while this stabilizing effect has very positive results for load transportation, improving cornering speed, it could hinder the vehicle's agility or responsiveness when initiating a turn. To achieve a final result that is sufficiently agile, it is advisable to combine said rear stabilizing effect with a fast or aggressive steering geometry, that is, with reduced rake-also known as the steering caster angle.

The stability provided by this invention can serve both to improve cornering speed and to enable the construction of narrower vehicles, which, for example, may operate or circulate in the same spaces as ordinary bicycles.

Naturally, this tricycle must be equipped with braking systems on both the front and rear chassis. An important advantage of the proposed invention is that, since the yawing motion of the rear chassis is proportional to the tilting of the front chassis, when the rear wheels are braked-whether to come to a stop, when starting off, or when parked-the tilting capability of the front chassis is also braked. Thus, when stationary, as long as the brakes on the rear wheels are engaged, the front chassis will remain upright. This avoids the need for tilt-locking systems used in existing tilting tricycles.

The proposed solution is therefore applicable to all types of three-wheeled vehicles with a single front wheel, regardless of the degree of freedom the driver has to shift their weight from side to side. It is therefore a valid solution for scooter-type vehicles-with the driver standing-tricycle bicycles-with the driver seated and pedaling-or motorized tricycles and other enclosed vehicles where the driver is seated.

### BRIEF DESCRIPTION OF THE FIGURES

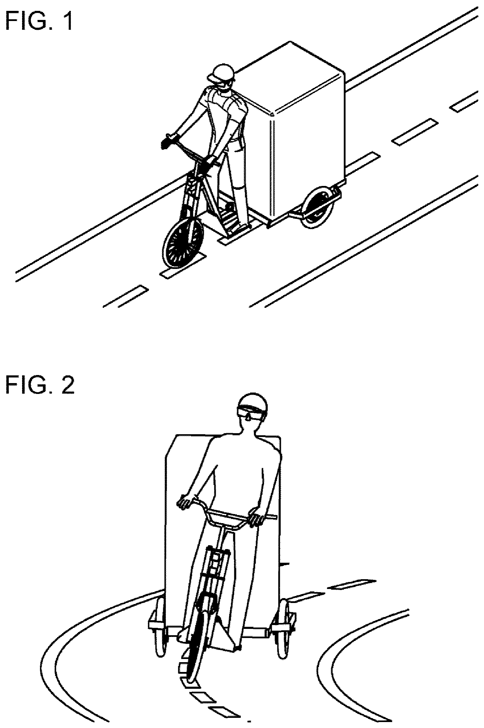

- FIG. 1 shows a perspective view of a cargo tricycle in scooter configuration according to the present invention, incorporating a cargo box on the rear chassis, and being ridden in a straight line.
- FIG. 2 shows a perspective view of the same cargo tricycle taking a turn, where it can be seen how the front wheel follows a trajectory exterior to that corresponding to the center of the load.

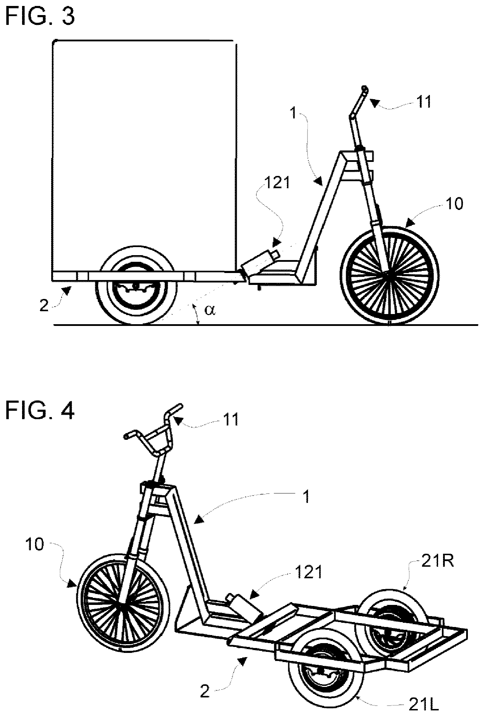

- FIG. 3 shows a side view of the vehicle of FIG. 1 without the driver, where the yaw-inducing angle can be seen (α)).
- FIG. 4 shows a perspective view of the vehicle of FIG. 3 but without the cargo box, in order to reveal its rear structure: rear chassis and wheels.

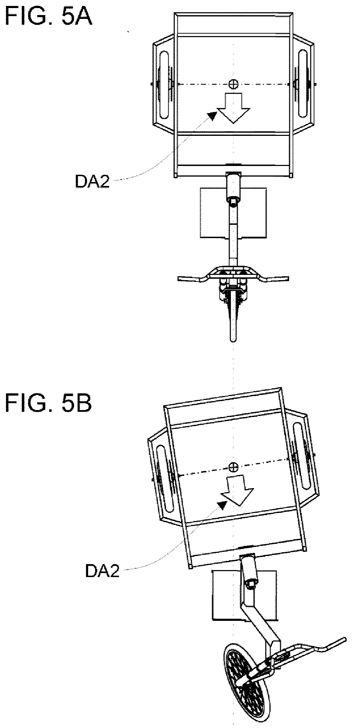

- FIGS. 5A and 5B show top views of the stationary vehicle of FIG. 4, corresponding to two possible states:
   ∘ FIG. 5A: tilt angle of the first chassis of 0°, handlebar steering angle of 0°, yaw angle of the second chassis 0°, and relative angle between front and rear wheels of 0°.
   ∘ FIG. 5B: tilt angle of the first chassis of 20°, handlebar steering angle of 24°, yaw angle of the second chassis 8.8°, and relative angle between front and rear wheels of 15.5°.

### DETAILED DESCRIPTION OF A PREFERRED EMBODIMENT

A preferred embodiment of the present invention proposes an articulated tricycle with an anti-tipping system, comprising:
- a front chassis (1) for accommodating and transporting at least one driver, equipped with a single wheel (10) positioned at the front of the vehicle, which is the primary steering wheel, controlled by means of a handlebar (11) or steering wheel;
- and a rear chassis (2) for load transport, with two rear wheels (21L, 21R) that define its single forward direction of travel (DA2);
- where both chassis are connected by means of a pivot articulation (121) whose geometric axis, located in a vertical plane that includes the straight-ahead direction of travel of the vehicle, forms an angle (α) greater than 20° and upward relative to said direction of travel. Hereinafter, this angle will be referred to as the yaw-inducing angle.

Said articulation (121) allows the front chassis (1) to tilt to either side of the tricycle, while forcing the rear chassis (2) into a significant yaw rotation toward the same side to which the front chassis (1) tilts, thereby providing stability and an anti-tipping effect.

Preferably, the yaw-inducing angle will be between 20° and 50°; more preferably, between 25° and 40°; and, in the most preferred option, between 30° and 35°, with α =30° corresponding to the figures.

To achieve a final result that is sufficiently agile, the steering geometry corresponding to the front wheel (10) preferably has a rake angle between 5° and 25°; more preferably, between 10° and 18°; and, in the most preferred option, 12.5°.

In a preferred option, the tricycle incorporates a parking brake capable of immobilizing both rear wheels (21L, 21R), thereby preventing tilting of the front chassis when the vehicle is parked.

### OTHER EMBODIMENTS

While the figures depict a scooter-type tricycle, and tricycle bicycles, as well as motor tricycles and other enclosed vehicles with a seated driver, have already been mentioned, the proposed configuration also allows for further possibilities. Given the ability of the rear wheel brakes to block tilting, one could even conceive of a three-wheeled car with the proposed configuration.

It is worth mentioning the case of the drivetrain in such bicycles-three-wheeled-since, with a pivot between the two chassis, a conventional solution cannot be used. As alternatives: On one hand, there are systems without a chain or other mechanical transmission means, but instead electric, where the pedals drive an electric generator that powers batteries or directly electric motors, which alone provide propulsion for the vehicle. On the other hand, a conventional crankset-and its corresponding chain-could be used if it were fixed to the rear chassis, although located under the saddle in a logical position for pedaling ergonomics, with the saddle preferably fixed to the front chassis. In such a case, the chain would function as in any rigid tricycle, and when the front chassis tilts while cornering, the cyclist would experience a variation in pedal position, but this would not prevent continued pedaling.

Finally, and in general, the proposed solution is applicable to all types of vehicles whose dynamic behavior resembles that of a tricycle with a single front wheel. For example, one that, in order to transport more weight, includes two wheels on each side of the rear chassis, or, also for example, one that replaces one of the wheels with another directional translation element, such as sled runners or tracks for mud or snow. In the claims, the term "wheels" will be used for easier reading and understanding, but it should be understood in the broad sense of "directional translation elements."

## Claims

1. An articulated tricycle with an anti-tipping system, comprising:
• a front chassis (1) for accommodating and transporting at least one driver, equipped with a single wheel (10) positioned at the front of the vehicle, said wheel being the primary steering wheel, controlled by means of a handlebar (11) or steering wheel; and
• and a rear chassis (2) for load transport, with two rear wheels (21L, 21R) that define its single forward direction of travel (DA2);
• where both chassis are connected by means of a pivot articulation (121) whose geometric axis, located in a vertical plane that includes the straight-ahead travel direction of the tricycle, forms an angle (α) upward relative to said straight-ahead travel direction, which angle will hereinafter be referred to as the yaw-inducing angle;
**characterized in that** said yaw-inducing angle (α) is greater than 20°, such that said articulation (121) allows the front chassis (1) to tilt to either side of the tricycle while forcing the rear chassis (2) into a significant yaw rotation toward the same side to which the front chassis (1) tilts.

2. The articulated tricycle with an anti-tipping system according to claim 1, **characterized in that** the yaw-inducing angle is between 25° and 40°.

3. The articulated tricycle with an anti-tipping system according to claim 2, **characterized in that** the yaw-inducing angle is between 30° and 35°.

4. The articulated tricycle with an anti-tipping system according to any of the preceding claims, **characterized in that** the steering geometry corresponding to the front wheel (10) has a rake angle between 5° and 25°.

5. The articulated tricycle with an anti-tipping system according to claim 4, **characterized in that** the steering geometry corresponding to the front wheel (10) has a rake angle between 10° and 18°.
